Europäisches Patentamt

European Patent Office

Office européen des brevets

(19)

(11) Numéro de publication : **0 366 526 B1**

(12) ## FASCICULE DE BREVET EUROPEEN

(45) Date de publication du fascicule du brevet :
23.12.92 Bulletin 92/52

(51) Int. Cl.⁵ : **B60T 7/12,** B60T 13/22,
B66B 5/04

(21) Numéro de dépôt : **89402881.0**

(22) Date de dépôt : **18.10.89**

(54) **Dispositif de freinage de sécurité.**

(30) Priorité : 25.10.88 FR 8813930
26.06.89 FR 8908455

(43) Date de publication de la demande :
02.05.90 Bulletin 90/18

(45) Mention de la délivrance du brevet :
23.12.92 Bulletin 92/52

(84) Etats contractants désignés :
AT BE CH DE ES FR GB GR IT LI LU NL SE

(56) Documents cités :
DE-A- 3 630 681
DE-C- 71 485
FR-A- 423 624
FR-A- 1 186 948

(73) Titulaire : **Marion, René André**
**57 rue Exelmans**
**F-78000 Versailles (FR)**

(72) Inventeur : **Marion, René André**
**57 rue Exelmans**
**F-78000 Versailles (FR)**

(74) Mandataire : **Robert, Jean-Pierre et al**
**CABINET BOETTCHER 23, rue la Boétie**
**F-75008 Paris (FR)**

EP 0 366 526 B1

Jouve, 18, rue Saint-Denis, 75001 PARIS

## Description

La présente invention concerne un dispositif de freinage de sécurité d'un mobile, que ce dernier soit automoteur, auquel cas le dispositif est embarqué, ou tracté par un organe extérieur (câble, chaîne... ). Dans ce cas, le dispositif de freinage peut être monté soit sur le mobile, soit sur un treuil de traction, soit enfin sur une poulie associée à un câble auxiliaire de parachute comme, par exemple, pour un ascenseur ou un monte-charge.

Le frein de sécurité est un dispositif connu en lui-même, dont le principe réside dans la libération d'un mécanisme armé au préalable, qui actionne directement ou indirectement le rapprochement d'un ou plusieurs corps de friction, dans le cas où le mobile a dépassé une valeur de consigne (vitesse ou longueur de course). On connait plusieurs types de mécanismes d'actionnement, qui comportent soit un mécanisme à ressorts qui est verrouillé dans un état d'énergie accumulée, soit un mécanisme de contre-poids immobilisé dans une position "haute". Les moyens de verrouillage ou d'immobilisation comprennent, pour certains d'entre-eux, un verrou mécanique à leviers (voir document FR-A-1 186 948), et pour d'autres, un circuit hydraulique engendrant une pression s'opposant à la libération de l'énergie accumulée par le mécanisme d'actionnement des organes de freinage. La pression de ce circuit disparait ou est réduite en réponse à un signal d'arrêt d'urgence émis par un capteur, par exemple de survitesse ou de position du mobile. Ces dispositifs connus présentent l'inconvénient de mettre en oeuvre des capteurs électriques ou électroniques pour piloter des électrovannes du circuit hydraulique, composants qui sont relativement fragiles, donc demandent un entretien et une maintenance importants. C'est notamment le cas du dispo-sitif selon le document DE-A-36 30 681.

L'invention entend proposer un dispositif de construction et d'entretien beaucoup plus simples, qui peut être mis en oeuvre sur de nombreux mobiles.

A cet effet, l'invention a donc pour objet un dispositif de freinage de sécurité d'un mobile comportant au moins un organe actif coopérant par friction avec un organe passif, l'organe actif étant maintenu éloigné de l'organe passif par un dispositif de verrouillage s'opposant à l'effet d'un élément moteur accouplé à l'organe actif et tendant à appliquer l'organe actif contre l'organe passif, ce dispositif de verrouillage étant constitué par un fluide incompressible enfermé dans un circuit possèdant au moins un orifice normalement fermé d'échappement pour le fluide incompressible hors du circuit dont l'ouverture est commandée lorsqu'une valeur de consigne liée au mouvement du mobile est atteinte ou dépassée, dans lequel l'un des organes actif ou passif porte la surface de friction coopérant avec l'autre organe, par l'intermédiaire d'une pièce mobile à l'encontre d'un organe compressible, sur une course limitée, l'intensité de l'effort de compression étant inférieure à l'effet développé par l'organe moteur tandis que l'ouverture de l'orifice d'échappement est commandée par la rupture d'une cloison du circuit.

La cloison du circuit est située sur la trajectoire empruntée par un heurtoir dont le mouvement est dépendant de celui du mobile à freiner lorsque la valeur de consigne liée au mouvement du mobile est atteinte ou dépassée.

Si cette valeur de consigne est une vitesse,le heurtoir est constitué par l'une des masselottes d'un régulateur de vitesse centrifuge qui comprend un moyeu rotatif dans un plan sensiblement vertical accouplé au mobile à freiner pourvu d'au moins un guide radial dans lequel la masselotte, qui est de forme allongée, est montée coulissante entre deux positions radiales extrêmes.

Dans le cas ou la valeur de consigne est une position correspondant à une fin de course, le heurtoir est constitué par une butée dont la trajectoire passe par la portion frangible, lorsque le déplacement du mobile a dépassé cette position.

Dans le cas du freinage de dispositifs transportant des personnes, il n'est pas recommandé d'appliquer une force de freinage trop intense, entraînant une décéleration que ces personnes ne pourraient pas supporter sans dommages. Dans une telle application, on aura un circuit de fluide incompressible qui comporte au moins deux branches parallèles dont l'une possède une section restreinte calibrée et un organe d'obturation de la branche sans restriction, mobile avec l'organe actif entre une première position où il libère la première branche et une deuxième position où il l'interrompt, cette seconde position étant atteinte lorsque l'organe actif a parcouru une course d'approche déterminée en direction de l'organe passif.

Une variante de réalisation.de cette application est telle que le circuit de fluide incompressible comporte deux parties successives isolées l'une de l'autre par un piston mobile entre deux positions définissant un volume balayé correspondant à une course d'approche de l'organe actif en direction de l'organe passif, le piston mobile établissant dans sa seconde position une communication entre la partie amont du circuit hydraulique et un canal de décharge calibré.

L'invention sera mieux comprise au cours de la description donnée ci-après à titre d'exemple non-limitatif, qui permettra d'en dégager les avantages et les caractéristiques secondaires.

Il sera fait référence aux dessins annexés dans lesquels:

    - la figure 1 est une vue d'un premier mode de réalisation d'un moyen de déclenchement du dispositif de freinage selon l'invention,

    - la figure 2 représente, par une coupe axiale, un régulateur conforme à l'invention,

    - la figure 3 est une coupe selon la ligne III-III de la figure 2, sur laquelle apparaît la courbe décrite par l'extrémité active des masselottes, en fonctionnement normal et en fonctionnement de sécurité,

- la figure 4 est une vue schématique d'un dispositif de freinage conforme à l'invention dans lequel on assure une progressivité dans l'application de la force de freinage,

- la figure 5 est une variante de réalisation de la figure 4,

- la figure 6 est une seconde variante de réalisation de la figure 4 dans laquelle le freinage prend en compte deux niveaux de charge de l'ascenseur

- la figure 7 est un graphique de l'effort de freinage en fonction du temps à partir de la rupture de la portion frangible.

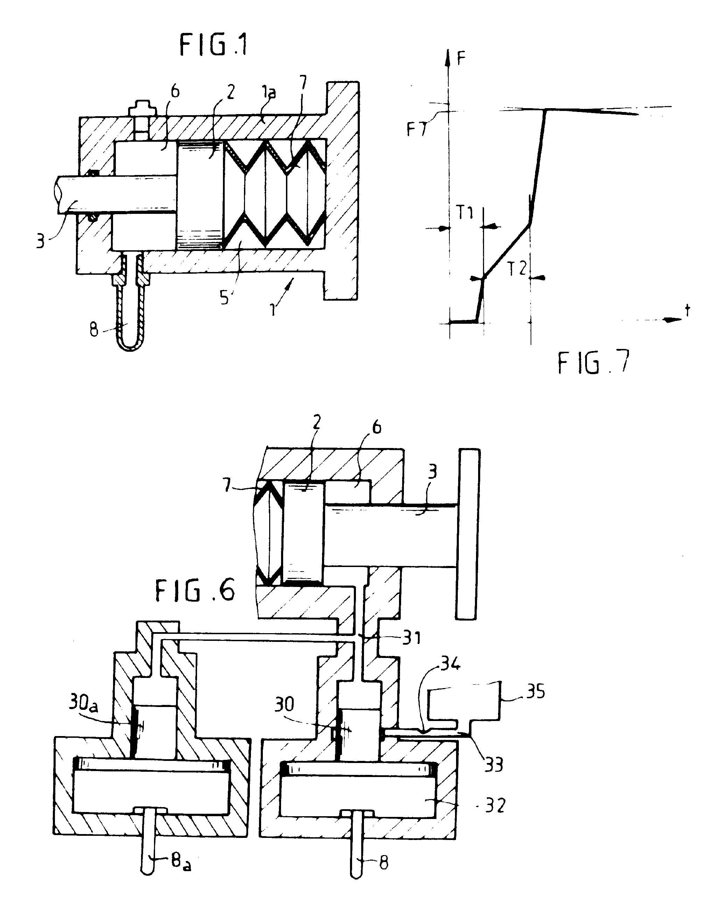

En se reportant tout d'abord à la figure 1, on voit un élément moteur de type vérin 1 comprenant un cylindre 1a dont le piston 2 est prolongé par une tige 3 qui est attelée à l'organe actif d'un dispositif de freinage conforme à l'invention. Cet organe actif peut être la tige 3 elle-même portant à son extrémité libre un corps de friction (non représenté), placé en regard d'une surface de friction solidaire de ou entraînée par le mobile à freiner (également non représentée). L'organe actif peut également être un élément séparé qui est maintenu éloigné de l'élément passif du frein par la tige 3 du piston qui agit comme un doigt de verrouillage de cet élément séparé, à l'encontre de l'effet d'un accumulateur d'énergie (ressort, contre-poids...) qui tend à rapprocher l'organe actif de l'organe passif.

Le piston 2 divise le cylindre 1a du vérin 1 en deux chambres 5 et 6, la chambre 5 étant équipée d'un ressort 7 (ici un empilage de rondelles Belleville) dont l'effet tend à faire sortir la tige 3, la chambre 6 étant une chambre hydraulique de blocage du piston 2, fermée de manière étanche. Cette chambre 6 possède une paroi 8suceptible d'être rompue sous forme d'un appendice faisant saillie hors du cylindre 1a du vérin. On notera que, dans le cas par exemple, où la tige 3 est l'organe actif du dispositif de freinage, on peut mettre en oeuvre plusieurs vérins 1 agissant ensemble sur le corps de friction, les chambres 6 étant réunies par un circuit hydraulique commun qui comporte l'appendice susdit. On comprend que le fait de briser l'appendice purge la chambre 6 ou le circuit auquel les chambres sont connectées, permettant ainsi la libération de l'énergie stockée par le ressort dans la ou les chambres 5, qui engendre la sortie des tiges 3 et, en conséquence, l'activation du dispositif de freinage.

L'appendice 8 doit être cassé au moment où le frein doit être mis en service, c'est-à-dire par un heurtoir dont la trajectoire passe par l'endroit où est l'appendice, lorsque le mobile à freiner est à l'extérieur de sa plage normale de fonctionnement (survitesse ou longueur de course anormale). On comprend qu'il faut établir un mouvement relatif entre l'appendice et le heurtoir qui soit dépendant du facteur de déclenchement du frein de sécurité. Dans le cas d'une fin de course, le heurtoir peut être constitué par une butée fixe située sur le trajet du mobile qui porte, de manière embarquée, le frein équipé de son dispositif de déclenchement, notamment si le mobile est automoteur. Dans le cas d'un mobile tracté, le frein peut être situé au niveau du treuil, ou d'un câble de parachute, et la butée portée par le mobile pour briser l'appendice, installé de manière fixe sur la structure de guidage du mobile.

S'il s'agit de freiner le mobile en cas de survitesse, le heurtoir sera porté par un dispositif sensible à la vitesse, tel qu'un régulateur à masselottes, dont les trajectoires s'établissent sur des courbes différentes selon la vitesse de rotation du régulateur.

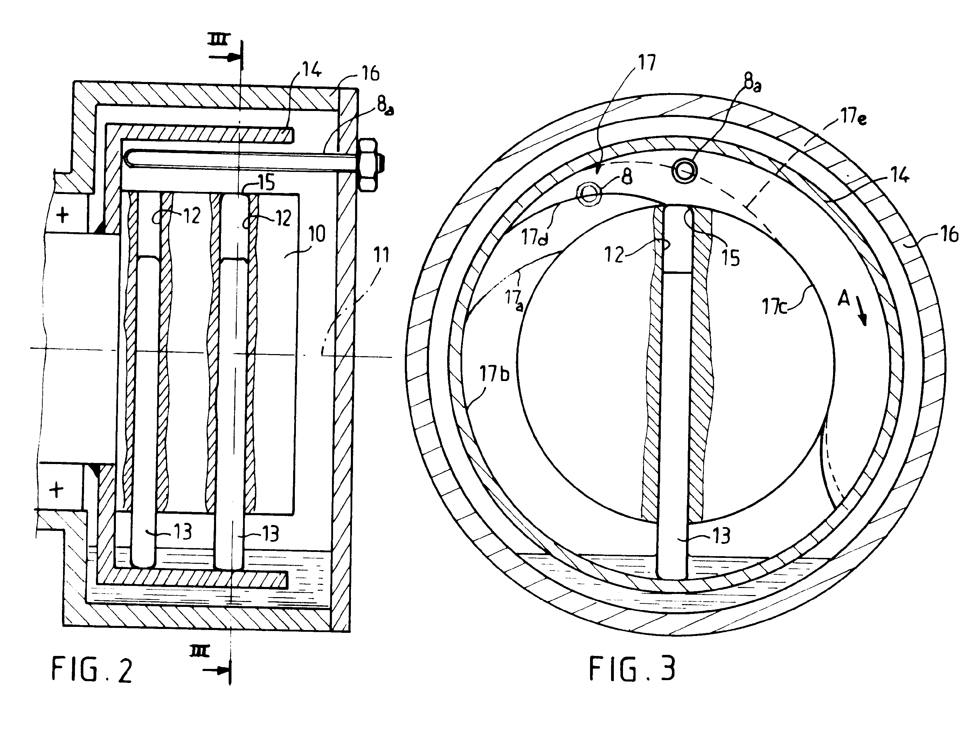

La figure 2 représente schématiquement, vu en coupe axiale, un régulateur conforme à l'invention. Ce dernier comporte un moyeu 10 entraîné en rotation autour d'un axe 11 horizontal. L'entraînement du moyeu peut être réalisé soit par roulement sur un guide fixe du mobile, soit par le déroulement d'un câble lié au mobile, qu'il s'agisse du câble de traction si le mobile est tracté, ou d'un câble auxiliaire, par exemple de parachute. Le moyeu tourne donc à une vitesse proportionnelle à la vitesse du mobile. Le moyeu 10 comporte des guides radiaux 12 dans lesquels des masselottes cylindriques 13 sont montées à coulissement. Le moyeu 10 comporte un carter tournant 14 qui forme appui radial pour les masselottes 13, lorsque l'effet de la pesanteur est supérieur à celui de la force centrifuge ou l'inverse. On notera que les guides radiaux 12 peuvent être rétreints à l'une de leurs extrémités, comme indiqué en 15 sur la figure 2. Les masselottes sont ainsi empêchées, en fonctionnement normal, de heurter deux fois par tour, le carter tournant 14. Le moyeu et le carter sont enfermés dans un boîtier 16 fixe qui contient un bain d'huile dans lequel les masselottes plongent. Le mouvement radial des masselottes assure le graissage de leur coulissement dans les guides 12.

Le moyeu des figures 2 et 3 peut compter quatre masselottes situées le long de diamètres décalés sur l'axe 11.

La courbe 17 décrite par une extrémité de chaque masselotte, lorsque le moyeu 11 tourne dans le sens A, est représentée sur la figure 3. Cette courbe résulte des actions conjuguées de la force centrifuge, de l'effet de la pesanteur et de la résistance au coulissement de la masselotte dans son guide du fait des frottements. Pour une première vitesse donnée, la partie 17a de cette courbe est celle pendant laquelle l'effet de la pesanteur devient prépondérant par rapport à la force centrifuge et à la résistance due aux frottements. L'extrémité de la masselotte passe alors de sa position radialement la plus extérieure (arc de cercle 17b) à sa position la plus intérieure (arc de cercle 17c), c'est-à-dire lorsque l'autre extrémité repose sur le rétreint 15 . Lorsqu'on augmente la vitesse du moyeu, la transition entre le niveau 17b et le niveau 17c se décale dans le sens A de rotation, car la force centrifuge à vaincre est plus importante. On comprend alors que l'on puisse placer l'appendice 8 du dispositif de la figure 1 à proximité de la trajectoire de transition 17a, 17d,17e, correspondant à la vitesse limite pour laquelle on souhaite un déclenchement du frein de sécurité.

Un mobile peut être équipé d'un dispositif de freinage en cas de survitesse, d'un dispositif de freinage en cas de dépassement d'une limite de trajet, ou des deux. Dans ce dernier cas, les organes de frein seront de préférence les mêmes; seuls les organes de déclenchement seront séparés. Ainsi, pour prendre un exemple, une cabine d'ascenseur peut être équipée d'un câble parachute qui est fixé à la cabine et qui entraîne en rotation une poulie montée sur un axe fixe, en haut de l'installation. Cette poulie est accouplée à un régulateur semblable à celui de la figure 3, et peut être freinée par un frein, qui agit ainsi sur le câble parachute, et qui possède un organe de déclenchement dont le circuit hydraulique comporte au moins deux cloisons à rompre, l'une en regard du régulateur, et l'autre à la fin de la course descendante de la cabine de l'ascenseur. On pourrait même prévoir une troisième cloison à l'autre extrémité de la course de l'ascenseur, s'il fallait le protéger contre un entraînement excessif dans le sens de la montée, dû à une trop faible charge de la cabine d'ascenseur conjuguée à une défaillance du système d'entraînement et de son frein, la cabine étant entraînée par la descente du contrepoids devenu prépondérant. Il est en effet très possible d'inclure dans le circuit hydraulique une canalisation de liaison fixe, courant le long de la cage de l'ascenseur, reliant les deux appendices du circuit.

On notera que la remise en service de l'installation, après le déclenchement de la sécurité, est extrèmement simple. Il suffit en effet de remplacer le tube brisé et de regonfler le circuit hydraulique à sa pression nominale par le moyen d'une simple pompe à main.

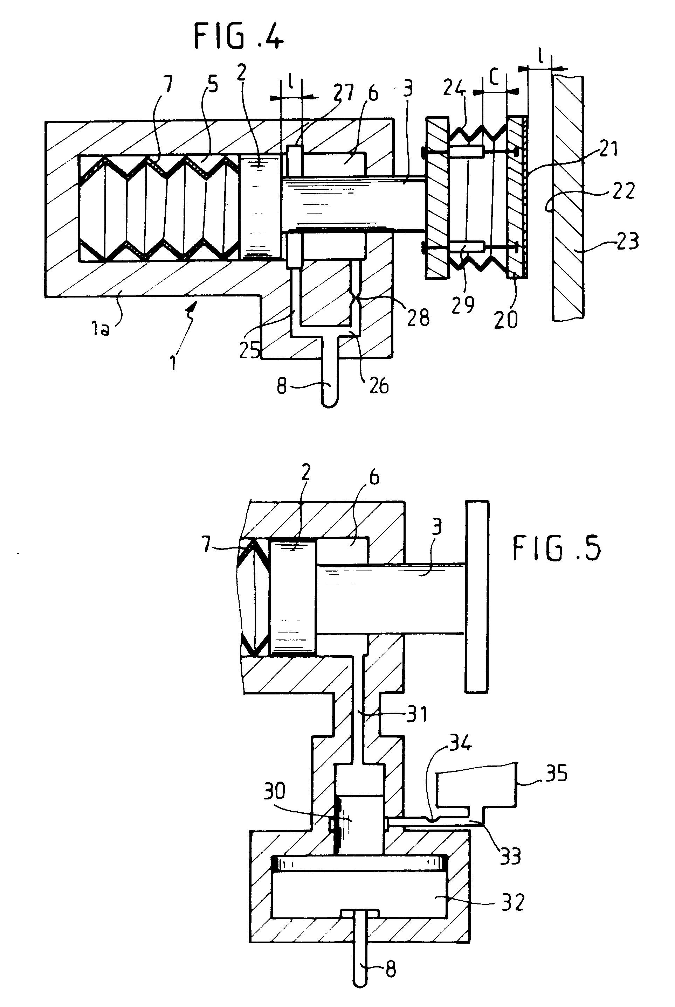

Sur la figure 4, on retrouve certains des éléments déjà décrits avec les mêmes références. On a représenté l'organe actif du frein à l'extrémité de la tige 3. Cet organe est un patin de freinage 20 comportant une garniture de friction 21 placée en regard d'une surface de friction 22 solidaire de l'organe passif 23 de freinage. On notera que le patin 20 est retenu sur la tige 3 contre l'effet d'un ressort de compression 24 (un empilement de rondelles Belleville) qui peut s'écraser sur une course C lorsque la force de freinage surmonte la précontrainte du ressort. En d'autres termes, l'effort de l'organe moteur (le ressort 7) est largement supérieur à l'effort croissant nécessaire pour écraser le ressort 24.

La chambre 6 communique avec l'appendice 8 par deux branches 25 et 26 parallèles d'un conduit de liaison, la branche 25, la plus proche du piston 2 lorsque le frein est armé, débouchant dans une rainure 27 ménagée dans la chambre 6, la branche 26 étant équipée d'une restriction calibrée 28.

Lorsque l'appendice est cassé, le fluide de la chambre 6 s'échappe brutalement par les deux conduits 25 et 26, mais principalement par la branche 25 qui n'offre pas de résistance à son écoulement.

Le piston 2 est donc rapidement repoussé vers la droite jusqu'à dépasser le bord extrème de la rainure 27. La course 1 parcourue par l'équipage mobile 2, 3, 20 correspond à une course d'approche réalisée en un temps très court. Le conduit 25 est alors obturé par le piston 2, le fluide ne pouvant alors plus s'échapper de la chambre qu'au travers de la restriction 28 dont le calibrage définit la vitesse beaucoup plus lente de déplacement de l'équipage mobile.

Durant cette seconde phase de son déplacement, le patin est appliqué sur l'organe 22, 23 sous un effort qui est égal à la valeur de la précompression du ressort 24 puis qui croît au fur et à mesure de l'augmentation de cette compression. La figure 7 montre l'évolution de la force de freinage en fonction du temps :
- phase d'approche, zone T1,
- action du patin avec compression du ressort d'une valeur égale à C, zone T2.

La pente de la courbe dans la zone T2 dépendra de la valeur de la restriction 28. La fin de la course C est marquée par l'arrivée en butée du patin 20 sur des entretoises 29 ou par la compression maximale des rondelles Belleville qui constituent le ressort 24. Lorsque l'équipage mobile est devenu rigide axialement, c'est la force F7 de l'organe moteur (ressort 7) qui constitue la force de freinage. On aura déterminé, en fonction du poids de l'installation à freiner, de la décélération maximale admise, du temps de freinage maximal... les ressorts 7 et 24 qui permettront d'obtenir l'arrêt de l'installation dans la zone T2 du graphique, la force F7 étant une force de maintien statique, égale à un multiple de la charge en mouvement ( la valeur en étant règlementairement fixée).

On comprend que cette variante du dispositif donne la possibilité d'agir sur la manière avec laquelle la force de freinage va pouvoir être appliquée.

La figure 5 est une variante de réalisation de la figure 4 dans laquelle le conduit hydraulique comporte entre la chambre 6 et l'appendice 8, une paroi mobile 30 divisant le circuit en une partie amont 31 et une partie aval 32 située du coté de l'appendice. Ces deux parties sont isolées l'une de l'autre, et lorsque l'appendice 8 est cassé, la paroi mobile se déplace vers la partie cassée puisque plus aucune pression de fluide ne la retient. Dans son mouvement, cette paroi balaye un volume qui forme une capacité d'absorption du fluide s'écoulant de la chambre 6, ce volume correspondant à la course d'appoche C de l'équipage mobile en direction de l'organe passif 22,23 du frein.

Cette paroi mobile, qui affecte ici la forme d'un piston, vient en butée contre un organe fixe, position dans laquelle un conduit 33 de décharge est découvert par le piston 30. Ce conduit 33 possède une restriction 34 qui joue le même rôle que la restriction 28 de la figure précédente. Le liquide s'échappant par ce conduit restreint, est recueilli par un réservoir 35, qui permet, quand on réarme le dispositif, d'apporter le complément de fluide nécessaire. La courbe de l'application des forces de freinage de ce dispositif est indentique à celle de la figure 7. On remarquera enfin que la paroi 30 constitue ici un piston d'isolement des deux tronçons amont 31 et aval 32 du circuit hydraulique, qui permet de limiter au maximum les fuites de liquide. Ce piston est ici étagé pour montrer qu'il agit comme un diviseur de pression : on peut en effet avoir besoin d'une pression au niveau de l'appendice qui soit plus faible que celle règnant dans la chambre 6, afin par exemple de ne pas trop sollicter la cloison à rupture.

La figure 6 est un exemple de réalisation du dispositif selon l'invention, comportant des moyens pour prendre en compte la possible variation de la charge du mobile à freiner. On supposera en effet, que l'appareil de la figure 5 a été règlé pour une charge moyenne d'utilisation, et qu'ainsi la course nécessaire à l'arrêt de l'ascenseur est acceptable. Dans le cas où les variations de charges peuvent être grandes, le règlage moyen peut ne pas être satisfaisant pour les charges maximales. On comprend en effet qu'au moment de la rupture du tube, le frottement dû au seul ressort 24 ne soit pas suffisant pour ralentir la charge à freiner qui voit sa vitesse encore augmenter avant de décroître, l'application de la force du moteur 7 se faisant alors tardivement au détriment de la longueur de freinage. Dans ce cas, on prévoit un second appendice à rupture 8a permettant de purger rapidement un volume supplémentaire de la chambre 6 -en dérivation de la purge lente par le conduit restreint 33- et de raccourcir le temps de compression du ressort 24, pour aboutir plus rapidement à l'application de la pleine force de l'organe moteur 7. Le tube 8a sera agencé sur le régulateur représenté aux figures 2 et 3 sur une trajectoire 17e de l'extrémité de la masselotte 13 parcourue si le mobile à freiner atteint une vitesse supérieure à celle qui a déjà engendré la rupture de l'appendice 8, répondant à une charge de ce mobile nettement supérieure à la charge moyenne pour laquelle le dispositif a été règlé afin d'obtenir une distance d'arrêt acceptable. On peut bien entendu, multiplier le nombre d'appendices pour prendre en compte de manière plus fine la variation possible de la charge à freiner.

L'invention n'est pas limitée à la description qui vient d'en être donnée. On notera par exemple, que le circuit hydraulique peut comporter une capacité de fluide sous pression (par exemple oléopneumatique), associée à un capteur de pression qui peut déclencher une alarme si la pression dans l'installation chute et devient dangereuse.

## Revendications

1. Dispositif de freinage de sécurité d'un mobile comportant au moins un organe actif coopérant par friction avec un organe passif, l'organe actif étant maintenu éloigné de l'organe passif par un dispositif de verrouillage s'opposant à l'effet d'un élément moteur (7) accouplé à l'organe actif et tendant à appliquer l'organe actif contre l'organe passif, ce dispositif de verrouillage étant constitué par un fluide incompressible enfermé dans un circuit (6) possèdant au moins un orifice normalement fermé d'échappement pour le fluide incompressible hors du circuit (6) dont l'ouverture est commandée lorsqu'une valeur de consigne liée au mouvement du mobile est atteinte ou dépassée, caractérisé en ce que l'un des organes actif ou passif porte la surface de friction (21) coopérant avec l'autre organe, par l'intermédiaire d'une pièce mobile (20) à l'encontre d'un organe compressible (24), sur une course limitée (C), l'intensité de l'effort de compression étant inférieure à l'effet développé par l'organe moteur (7) et en ce que l'ouverture de l'orifice d'échappement est commandée par la rupture d'une cloison (8) du circuit (6).

2. Dispositif de freinage selon la revendication 1, caractérisé en ce que la cloison (8) du circuit est située sur la trajectoire empruntée par un heurtoir (13) lorsque la valeur de consigne liée au mouvement du mobile est atteinte ou dépassée.

3. Dispositif de freinage selon la revendication 2, caractérisé en ce que le heurtoir est constitué par l'une des masselottes d'un régulateur de vitesse centrifuge qui comprend un moyeu rotatif (10) dans un plan sensiblement vertical accouplé au mobile à freiner pourvu d'au moins un guide radial (12) dans lequel la masselotte (13), qui est de forme allongée, est montée coulissante entre deux positions radiales extrêmes.

4. Dispositif de freinage selon l'une des revendications 1 à 3, caractérisé en ce que le circuit de fluide incompressible comporte au moins deux branches (25,26) parallèles dont l'une (26) possède une section restreinte (28) calibrée et un organe (2) d'obturation de la branche sans restriction, mobile avec l'organe actif entre une première position où il libère la première branche et une deuxième position où il l'interrompt, cette seconde position étant atteinte lorsque l'organe actif a parcouru une course d'approche déterminée en direction de l'organe passif.

5. Dispositif de freinage selon l'une des revendications 1 à 3, caractérisé en ce que le circuit de fluide incompressible comporte deux parties successives (31,32) isolées l'une de l'autre par un piston (30) mobile entre deux positions définissant un volume balayé correspondant à une course d'approche de l'organe actif (20) en direction de l'organe passif (22,23), le piston mobile établissant dans sa seconde position une communication entre la partie amont (31) du circuit hydraulique et un canal (33) de décharge calibré (34).

6. Dispositif de freinage selon la revendication 4 ou la revendication 5, caractérisé en ce que le circuit de fluide hydraulique comporte, en dérivation sur le canal de décharge comportant la restriction de section ( 28, 34), une conduite (31a), aboutissant comportant une seconde cloison à rupture(8a).

7. Dispositif de freinage selon la revendication 6 caractérisé en ce que la seconde cloison (8a) est séparée de la partie amont du circuit par un piston mobile (30a).

**Patentansprüche**

1. Sicherheitsbremseinrichtung für ein bewegliches Teil, umfassend wenigstens ein aktives Organ, welches mit einem passiven Organ in Reibeingriff kommt, wobei das aktive Organ vom passiven Organ durch eine Verriegelungseinrichtung auf Abstand gehalten wird, welche der Kraft eines Verstellelementes (7) entgegenwirkt, das mit dem aktiven Organ gekoppelt ist und das aktive Organ gegen das passive Organ zu drücken sucht, wobei die Verriegelungseinrichtung durch ein inkompressibles Fluid gebildet wird, welches in einem Schaltkreis (6) enthalten ist, der wenigstens eine normalerweise geschlossene Austrittsöffnung für den Austritt des inkompressiblen Fluides aus dem Schaltkreis (6) aufweist, die geöffnet wird, wenn ein an die Bewegung des beweglichen Teils gebundener Vorgabewert erreicht oder überschritten wird, dadurch **gekennzeichnet**, daß eines der Organe, nämlich das aktive oder das passive Organ, die mit dem anderen Organ zusammenwirkende Reibfläche (21) unter Zwischenschaltung eines Verstellgliedes (20) trägt, welches gegen die Wirkung eines kompressiblen Organs (24) über einen begrenzten Weg (C) verstellbar ist, wobei die Größe der Kompressionskraft kleiner als die vom Verstellelement (7) aufgebrachte Kraft ist, und daß das Öffnen der Austrittsöffnung durch das Zerbrechen einer Trennwand (8) des Schaltkreises (6) gesteuert wird.

2. Bremseinrichtung nach Anspruch 1, dadurch **gekennzeichnet**, daß die Trennwand (8) des Schaltkreises in der Bewegungsbahn angeordnet ist, die von einem Schlagelement (13) durchlaufen wird, wenn der an die Bewegung des beweglichen Teils gebundene Vorgabewert erreicht oder überschritten wird.

3. Bremseinrichtung nach Anspruch 2, dadurch **gekennzeichnet**, daß das Schlagelement von einem der Fliehgewichte eines Fliehkraft-Geschwindigkeitsreglers gebildet wird, welcher eine in einer im wesentlichen vertikalen Ebene drehende Nabe (10) umfaßt, die mit dem abzubremsenden Teil gekuppelt ist und mit wenigstens einer radialen Führung (12) versehen ist, in der das Fliehgewicht (13), welches eine längliche Form hat, zwischen zwei radialen Endpositionen verschiebbar angeordnet ist.

4. Bremseinrichtung nach einem der Ansprüche 1 bis 3, dadurch **gekennzeichnet**, daß der Schaltkreis des inkompressiblen Fluides wenigstens zwei parallele Leitungszweige (25, 26) umfaßt, deren einer (26) einen kalibrierten, eingeschnürten Querschnitt (28) hat, sowie ein Organ (2) zum Verschließen des Leitungszweiges ohne Einschnürung, welches mit dem aktiven Organ zwischen einer ersten Position, bei der es den ersten Leitungszweig freigibt, und einer zweiten Position, bei der es diesen unterbricht, verstellbar ist, wobei diese zweite Position erreicht wird, wenn das aktive Organ einen bestimmten Zustellweg in Richtung auf das passive Organ durchlaufen hat.

5. Bremseinrichtung nach einem der Ansprüche 1 bis 3, dadurch **gekennzeichnet**, daß der Schaltkreis des inkompressiblen Fluides zwei hintereinander angeordnete Abschnitte (31, 32) aufweist, die voneinander durch einen Kolben (30) getrennt sind, der zwischen zwei ein Verdrängungsvolumen definierenden Positionen beweglich ist, das einem Zustellweg des aktiven Organes (20) in Richtung zum passiven Organ (22, 23) entspricht, wobei der bewegliche Kolben in seiner zweiten Position eine Verbindung zwischen dem stromaufwärtigen Abschnitt (31) des hydraulischen Schaltkreises und einem kalibrierten (34) Abströmkanal (33) herstellt.

6. Bremseinrichtung nach Anspruch 4 oder Anspruch 5, dadurch **gekennzeichnet**, daß der Schaltkreis des hydraulischen Fluides zur Umgehung des die Querschnittseinschnürung (28, 34) aufweisenden Abströmkanals eine an diesen angrenzende Leitung (31a) aufweist, welcher eine zweite zu zerbrechende Trennwand (8a) hat.

7. Bremseinrichtung nach Anspruch 6, dadurch **gekennzeichnet**, daß die zweite Trennwandwand (8a) vom stromaufwärtigen Abschnitt des Schaltkreises durch einen beweglichen Kolben (30a) getrennt ist.

## Claims

1. A safety brake for a moving member, the brake including at least one active member co-operating by friction with a passive member, the active member being held at a distance from the passive member by latching means opposing the effect of a drive element (7) coupled to the active member against the passive member, these latching means having an incompressible fluid enclosed in a circuit (6) possessing at least one normally closed escape aperture for the incompressible fluid, the opening of which aperture being controlled when a reference value depending on the notion of the moving member is reached of exceeded, characterized in that one of said active of passive members carries the friction surface (21) co-operating with the other member by means of a moving piece (20) engaging a compressible member (24), of a limited stroke (C), the compression force being less than the effect developped by the drive element (7) while the opening of the escape aperture is controlled by a breakage of a wall (8) of the circuit (6).

2. A brake according to claim 1, characterized in that the wall (8) of the circuit is situated on a path followed by a striker (13) when the reference value for the notion of the moving member is reached or exceeded.

3. A brake according to claim 2, characterized in that the striker is constituted by any one of a plurality of weights (13) in a centrifugal speed governor comprising a rotary hub (10) rotating in a substantially vertical plane and coupled to the moving member to be braked, the hub being provided with at least one radial guide (12) in which an elongate weight (13) is slidably mounted to slide between two extreme radial positions.

4. A brake according to any one of claims 1 to 3, characterized in that the incompressible fluid circuit includes at least two parallel branches (25, 26), a first one of said branches (26) having a calibrated restricted section (28) and a member (2) for shutting off a second branch without such a restriction, said member moving together with the active member between a first position in which it leaves the second branch open and a second position in which it closes off said second branch, sait second position being reached when the active member has travelled the length of a determined approach stroke towards the passive member.

5. A brake according to any one of claims 1 to 3, characterized in that the incompressible fluid circuit includes two successive portions (31, 32) which are isolated from each other by a piston (30) moveable between two positions defining a swept volume corresponding to an approach stroke of the active member (20) towards the passive member (22, 23), the moving piston, when in its second position, establishing communication between the upstream portion (31) of the hydraulic circuit and a calibrated (34) discharge channel (33).

6. A brake acording to claim 4 or 5, characterized in that the hydraulic fluid circuit includes a duct (31a) connected in parallel with the discharge channel and including a restricted section (28, 34), said duct including a second frangible wall (8a).

7. A brake according to claim (6), characterized in that the second wall (8a) is separated from an upstream portion of the circuit by a moving piston (30a).

FIG.1

FIG.7

FIG.6

FIG. 3

FIG. 2

# FIG .4

# FIG .5